# EUROPEAN PATENT APPLICATION

(11) **EP 4 454 848 A1**
(43) Date of publication of application: **30.10.2024**
(21) Application number: 22909923.9
(22) Date of filing: 19.12.2022
(51) Int. Cl.: B28D 5/04, B26D 1/547

(54) **WIRE TAKE-UP AND PAY-OFF DEVICE AND SLICING MACHINE**

(30) Priority: 23.12.2021 CN 202123269571 U
(71) Applicant: Qingdao Gaoce Technology Co., Ltd, Qingdao, Shandong 266114 (CN)
(72) Inventor: GUO, Dang, Qingdao, Shandong 266114 (CN); ZHANG, Lu, Qingdao, Shandong 266114 (CN); LIU, Gang, Qingdao, Shandong 266114 (CN); FAN, Guoqiang, Qingdao, Shandong 266114 (CN); CHEN, Mingqiang, Qingdao, Shandong 266114 (CN); ZHANG, Xinkai, Qingdao, Shandong 266114 (CN); LIU, Shiyan, Qingdao, Shandong 266114 (CN)
(74) Representative: Zacco GmbH
(86) International application number: PCT/CN2022/139948
(87) International publication number: WO 2023/116610

(57) **Abstract**

A wire take-up and pay-off device (3), including: a wire take-up and pay-off driver (31); a rotating shaft (32), which has a rear end connected with the wire take-up and pay-off driver; a front stop sleeve (33), fixedly sleeved on a front end of the rotating shaft and rotating synchronously with the rotating shaft; a rear stop sleeve (34), fixedly sleeved on the rear end of the rotating shaft and rotating synchronously with the rotating shaft; and a wire roller (35), fixedly sleeved outside of the front stop sleeve and the rear stop sleeve and rotating synchronously with the front stop sleeve and the rear stop sleeve. Further included is a slicing machine having the wire take-up and pay-off device. The wire take-up and pay-off device and the slicing machine have small volumes, thereby facilitating assembly, hoisting and transportation.

## Description

### Technical Field

The present disclosure relates to a technology of cutting equipment for hard and brittle materials, and in particular, to a wire take-up and pay-off device and a slicing machine.

### Background

A slicing machine is equipment for cutting a rod of hard and brittle material into slices. Regarding the slicing machine, generally two parallel main rollers are disposed horizontally, and a single diamond wire is wound around the two main rollers to form at least 2000 wire saws. The rod of hard and brittle material moves from top to bottom and passes between the two main rollers, and the main rollers rotate to drive the diamond wire to move at a high speed to cut the rod of hard and brittle material into a slice shape.

Two ends of the diamond wire are respectively wound around a pay-off device and a take-up device, and the diamond wire is stored on the take-up device after passing through the main rollers from the pay-off device. Reverse movement can also be achieved, that is, the diamond wire is stored on the pay-off device after passing through the main rollers from the take-up device, which is equivalent to exchange of functions of the pay-off device and the take-up device. Therefore, the pay-off device and the take-up device can adopt the same structure, and are collectively referred to as a wire take-up and pay-off device.

### Summary

### Technical Problem

In a conventional slicing machine, a wire take-up and pay-off device has a large volume, is disposed on the rear end of a main roller, and occupies a large space, such that the whole slicing machine has a large volume, and the processes of assembly, hoisting and transportation are difficult.

### Solution to the Problem

### Technical Solution

In order to solve one of the described technical defects, embodiments of the present disclosure provide a wire take-up and pay-off device and a slicing machine.

According to a first aspect of embodiments of the present disclosure, provided is a wire take-up and pay-off device, including:
a wire take-up and pay-off driver;
a rotating shaft, a rear end of the rotating shaft is connected with the wire take-up and pay-off driver;
a front stop sleeve, fixedly sleeved on a front end of the rotating shaft and rotating synchronously with the rotating shaft;
a rear stop sleeve, fixedly sleeved on the rear end of the rotating shaft and rotating synchronously with the rotating shaft; and
a wire roller, fixedly sleeved outside of the front stop sleeve and the rear stop sleeve, and rotating synchronously with the front stop sleeve and the rear stop sleeve.

According to the described wire take-up and pay-off device, a front stop portion is disposed on a periphery of the front stop sleeve; an outer diameter of the front stop portion gradually decreases in a front-to-rear direction, and a rear end of the front stop portion extends to a rear end of the front stop sleeve; and
a rear stop portion is disposed on a periphery of the rear stop sleeve; and an outer diameter of the rear stop portion gradually increases in a front-to-rear direction, and a front end of the rear stop portion extends to a front end of the rear stop sleeve;
an inner wall of a front end of the wire roller is configured with a surface that matches and contacts the front stop portion, and an inner wall of a rear end of the wire roller is configured with a surface that matches and contacts the rear stop portion; and the front end of the wire roller is sleeved outside the front stop portion, and the rear end of the wire roller is sleeved outside the rear stop portion.

The described wire take-up and pay-off device further includes: an expansion sleeve, tightly sleeved between the rear stop sleeve and the rotating shaft.

According to the described wire take-up and pay-off device, an inner diameter of the front end of the rear stop sleeve is greater than an inner diameter of an rear end of the rear stop sleeve; the expansion sleeve is disposed between the front end of the rear stop sleeve and the rotating shaft; and the rear end of the rear stop sleeve is in contact with the rotating shaft.

The described wire take-up and pay-off device, further includes: a front stop sleeve fixing assembly, disposed on an front end of the front stop sleeve and used for fixing the front stop sleeve.

According to the described wire take-up and pay-off device, the front end of the front stop sleeve is configured with a mounting groove with an opening facing forward, a central line of the mounting groove coincides with a central line of the rotating shaft; a stop edge formed by extending inward is disposed on the opening of the mounting groove; and
the front stop sleeve fixing assembly includes:
a screw, a rear end of the screw is fixedly connected to the front end of the rotating shaft;
a stop block, sleeved on the screw, and a rear end of the stop block is limited in the mounting groove by the stop edge; and
a locking nut, disposed on a front end of the stop block and being in threaded fit with the screw.

According to the described wire take-up and pay-off device, the front stop sleeve fixing assembly further includes:
a disc spring, sleeved on the screw and disposed between the stop block and the rotating shaft.

The described wire take-up and pay-off device further includes:
a support sleeve, sleeved on the rotating shaft and disposed between the front stop sleeve and the rear stop sleeve; wherein the support sleeve is in clearance fit with the wire roller.

The described wire take-up and pay-off device further includes: a motor fixing frame;
the motor fixing frame includes:
a first mounting plate; wherein the first mounting plate is parallel to a central line direction of the rotating shaft and is disposed on a side surface of the wire take-up and pay-off driver, and the wire take-up and pay-off driver is mounted on the first mounting plate by a fixing base; and
a second mounting plate, perpendicularly connected to a front end of the first mounting plate; wherein the second mounting plate is configured with a through hole for the rotating shaft to pass through.

The described wire take-up and pay-off device further includes:
a stop pin base, disposed on a front end face of the second mounting plate; wherein the stop pin base is configured with a pin hole into which a stop pin is inserted.

The described wire take-up and pay-off device further includes:
at least two support rods, disposed side by side on the front end face of the second mounting plate, and disposed below the rotating shaft; wherein the at least two support rods extend along the central line direction of the rotating shaft, and a preset gap exists between any two support rods of the at least two support rods.

According to a second aspect of embodiments of the present disclosure, provided is a slicing machine, including: the wire take-up and pay-off device as described above and a cutting device, wherein a cutting wire is wound on the wire take-up and pay-off device and the cutting device.

### Beneficial Effects of the Disclosure

### Beneficial Effects

In the technical solutions provided in embodiments of the present disclosure, the rotating shaft is directly connected with the wire take-up and pay-off driver, the front stop sleeve and the rear stop sleeve are both sleeved on the rotating shaft, and the wire roller is sleeved on the front stop sleeve and the rear stop sleeve and rotates synchronously with the rotating shaft; a coupling is not needed, such that the volume of the wire take-up and pay-off device can be greatly reduced, the space occupied thereby can be reduced, and the layout and assembly thereof on the slicing machine can be more convenient; and the volume of the slicing machine is reduced, thereby also facilitating hoisting and transportation of the slicing machine.

### Brief Description of the Drawings

### Description of the Drawings

Drawings illustrated herein are used for providing further understanding of some embodiments of the present disclosure and constitute a part of some embodiments of the present disclosure, and the illustrative embodiments of the present disclosure and illustrations thereof are used for explaining some embodiments of the present disclosure, rather than constitute inappropriate limitation on some embodiments of the present disclosure. In the drawings:
Fig. 1 illustrates a schematic structural diagram of a wire take-up and pay-off device provided according to embodiments of the present disclosure;
Fig. 2 illustrates a cross-sectional view of a wire take-up and pay-off device provided according to embodiments of the present disclosure;
Fig. 3 illustrates one side view of a cutting station of a slicing machine provided according to embodiments of the present disclosure;
Fig. 4 illustrates another side view of a cutting station of a slicing machine provided according to embodiments of the present disclosure;
Fig. 5 illustrates a schematic structural diagram of a slicing machine provided according to embodiments of the present disclosure;
Fig. 6 illustrates a schematic structural diagram of a frame in a slicing machine provided according to embodiments of the present disclosure;
Fig. 7 illustrates an enlarged view of region A in Fig. 6;
Fig. 8 illustrates a side view of routing of a cutting wire of a slicing machine provided according to embodiments of the present disclosure;
Fig. 9 illustrates a side view in another angle of routing of a cutting wire of a slicing machine provided according to embodiments of the present disclosure;
Fig. 10 illustrates a schematic structural diagram of a cutting wire steering device provided according to embodiments of the present disclosure;
Fig. 11 illustrates a partially enlarged view of a cutting wire steering device provided according to embodiments of the present disclosure;
Fig. 12 illustrates a cross-sectional view of a guide rod in a cutting wire steering device provided according to embodiments of the present disclosure;
Fig. 13 illustrates an enlarged view of region B in Fig. 10;
Fig. 14 illustrates a schematic structural diagram of a mounting structure of a main roller provided according to embodiments of the present disclosure;
Fig. 15 illustrates a cross-sectional view of a mounting structure of a main roller provided according to embodiments of the present disclosure;
Fig. 16 illustrates a schematic structural diagram of a tension adjustment device provided according to embodiments of the present disclosure;
Fig. 17 illustrates a schematic structural diagram of a wire laying device provided according to embodiments of the present disclosure;
Fig. 18 illustrates a schematic structural diagram of a feeding device provided according to embodiments of the present disclosure; and
Fig. 19 illustrates a side view of a feeding device provided according to embodiments of the present disclosure.

### Reference signs:

1 - Frame; 11 - Cutting frame; 111 - Upper frame; 1111 - Recessed platform; 112 - Lower frame; 113 - Frame opening; 114 - Sealing strip; 115 - Positioning block; 116 - Feeding through hole; 12 - Connecting frame; 121 - Upper connecting cross beam; 122 - Lower connecting cross beam;
2 - Cutting device; 21 - Main roller; 211 - Elastic pull rod; 22 - Main roller driver; 23 - Front axle casing; 231 - Front axle box; 232 - Front bearing; 233 - Front connecting shaft; 24 - Rear axle casing; 241 - Rear axle box; 242 - Rear bearing; 243 - Rear connecting shaft; 25 - Coupling;
3 - Wire take-up and pay-off device; 31 - Wire take-up and pay-off driver; 311 - First mounting plate; 312 - Second mounting plate; 313 - Fixing base; 32 - Rotating shaft; 33 - Front stop sleeve; 331 - Screw; 332 - Stop block; 333 - Locking nut; 334 - Disc spring; 34 - Rear stop sleeve; 341 - Expansion sleeve; 35 - Wire roller; 36 - Support sleeve; 37 - Stop pin base; 38 - Support rod;
4 - Wire laying device; 41 - Wire laying motor; 42 - Wire laying module; 43 - Wire laying wheel; 44 - Counterweight mechanism;
5 - Steering device; 51 - Steering base; 52 - Guide rod; 53 - Steering wheel base; 531 - Upper slide base; 532 - Lower slide base; 54 - Steering wheel; 55 - Steering vertical plate; 551 - Hinge shaft; 552 - Long hole; 553 - Threaded connecting member; 56 - Steering wheel connecting member; 57 - Steering wheel shield;
6 - Tension adjustment device; 61 - Tension motor; 62 - Tension base; 63 - Tension arm; 64 - Tension wheel; 65 - Limiting arm;
7 - Feeding device; 71 - Feeding base; 72 - Feeding driving assembly; 73 - Sliding plate box; 74 - Support base; 75 - Slider rail mechanism; 76 - Lead screw; 77 - Silicon material clamping base;
81 - Cutting wire.

### Best Embodiments for Implementing the Disclosure

### Best Embodiments of the Disclosure

In order to make the technical solutions and advantages of embodiments of the present disclosure clearer and more comprehensible, hereinafter, the exemplary embodiments of the present disclosure are further described in detail with reference to the accompanying drawings. Apparently, the embodiments as described are merely a part rather than all of the embodiments of the present disclosure. It is to be noted that embodiments in the present disclosure and features in the embodiments can be combined with one another without conflicts.

Embodiments of the present disclosure provide a wire take-up and pay-off device, which can be used in a slicing machine. The slicing machine cuts a rod of hard and brittle material into slices by using a cutting wire, wherein the rod of hard and brittle material can specifically be a silicon rod, sapphire, or the like. In this embodiment, a silicon rod is used as an example, and the silicon rod is cut into silicon slices by using the slicing machine. The wire take-up and pay-off device is used for storing or releasing a cutting wire, and the cutting wire can specifically be a diamond wire.

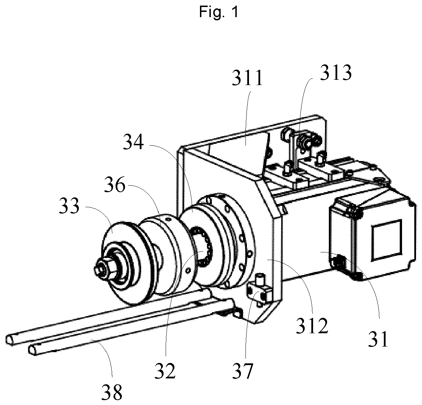

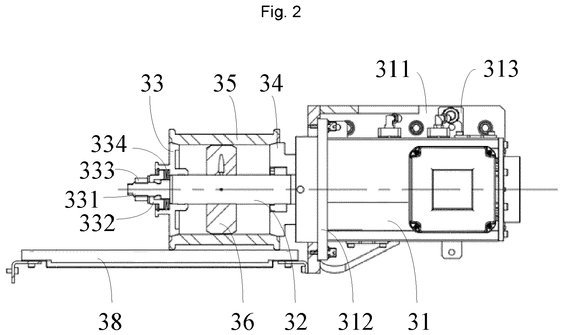

Fig. 1 illustrates a schematic structural diagram of a wire take-up and pay-off device provided according to embodiments of the present disclosure; and Fig. 2 illustrates a cross-sectional view of a wire take-up and pay-off device provided according to embodiments of the present disclosure. As shown in Figs. 1 and 2, the wire take-up and pay-off device provided in this embodiment includes: a wire take-up and pay-off driver 31, a rotating shaft 32, a front stop sleeve 33, a rear stop sleeve 34 and a wire roller 35. Taking the view of Fig. 2 as an example, in Fig. 2, the left side is the front end, and the right side is the rear end.

The wire take-up and pay-off driver 31 can be a driving motor, a rear end of the rotating shaft 32 is connected with the wire take-up and pay-off driver 31, and the wire take-up and pay-off driver 31 is configured to drive the rotating shaft 32 to rotate.

The front stop sleeve 33 is fixedly sleeved on a front end of the rotating shaft 32, and rotates synchronously with the rotating shaft 32. The rear stop sleeve 34 is fixedly sleeved on the rear end of the rotating shaft 32 and rotates synchronously with the rotating shaft 32. The wire roller 35 is fixedly sleeved outside of the front stop sleeve 33 and the rear stop sleeve 34, and rotates synchronously with the front stop sleeve 33 and the rear stop sleeve 34.

A cutting wire can be wound around an outer peripheral surface of the wire roller 35; the wire take-up and pay-off driver 31 drives the rotating shaft 32 to rotate in a forward direction, and the front stop sleeve 33 and the rear stop sleeve 34 drive the wire roller 35 to rotate, such that the cutting wire can be wound around the wire roller 35; and when the wire take-up and pay-off driver 32 drives the wire roller 35 to rotate in a reverse direction, the cutting wire wound on the wire roller 35 can be paid off.

In a conventional solution, the wire roller 35 is connected with the driving motor via a coupling, and the coupling has a large volume, such that the volume of the wire take-up and pay-off device is large, and a large mounting space needs to be provided for the wire take-up and pay-off device; therefore, the cutting machine has a large volume, and there is a relatively large difficulty in assembly, hoisting and transportation processes.

However, in the technical solution provided in this embodiment, the rotating shaft is directly connected with the wire take-up and pay-off driver, the front stop sleeve and the rear stop sleeve are both sleeved on the rotating shaft, and the wire roller is sleeved on the front stop sleeve and the rear stop sleeve and rotates synchronously with the rotating shaft; the coupling is not needed, such that the volume of the wire take-up and pay-off device can be greatly reduced, the space occupied thereby can be reduced, and the layout and assembly thereof on the slicing machine can be more convenient; and the volume of the slicing machine is reduced, thereby also facilitating hoisting and transportation of the slicing machine.

On the basis of the technical solution above, the present embodiment provides a specific implementation of connection of the wire rollers 35:
the front stop sleeve 33 has an annular shape and is configured with a front stop portion on the outer periphery thereof, wherein the front stop portion can cover the entire peripheral surface of the front stop sleeve 33, or can cover only a partial region of the peripheral surface. An outer diameter of the front stop portion gradually decreases in a front-to-rear direction, and a rear end of the front stop portion extends to a rear end of the front stop sleeve 33. As shown in the angle of the view of Fig. 2, the rear end of the front stop sleeve 33 presents an inwardly inclined surface.

The rear stop sleeve 34 has an annular shape and is configured with a rear stop portion on the outer periphery thereof, wherein the rear stop portion can cover the entire peripheral surface of the rear stop sleeve 34, or can cover only a partial region of the peripheral surface. An outer diameter of the rear stop portion gradually increases in a front-to-rear direction, and a front end of the rear stop portion extends to a front end of the rear stop sleeve 34. As shown in the angle of the view of Fig. 2, the front end of the rear stop sleeve 34 presents an inwardly inclined surface.

Correspondingly, the wire roller 35 is in a cylindrical shape, an inner wall of a front end of the wire roller 35 is configured with a surface that matches and contacts the front stop portion, and an inner wall of a rear end of the wire roller 35 is configured with a surface that matches and contacts the rear stop portion. The front end of the wire roller 35 is sleeved outside the front stop portion, and the rear end of the wire roller 35 is sleeved outside the rear stop portion.

The front stop portion and the rear stop portion limit the wire roller 35 from moving in its axial direction, such that the wire roller 35 is fixed between the front stop sleeve 33 and the rear stop sleeve 35. The wire roller 35 can be in force fit with the front stop sleeve 33 and the rear stop sleeve 35, such that the wire roller 35 rotates together with the front stop sleeve 33 and the rear stop sleeve 35.

The connection manner of the rear stop sleeve 34 and the rotating shaft 31 can be pressing connection. Alternatively, this embodiment provides a specific implementation: an extension sleeve 341 is tightly sleeved between the rear stop sleeve 34 and the rotating shaft 31. The expansion sleeve 341 can apply an expansion force inwards and outwards along a radial direction, press the rotating shaft 31 inwards, and press the rear stop portion sleeve 34 outwards, such that the rear stop portion sleeve 34 is fixedly connected with the rotating shaft 31 and rotates synchronously with the rotating shaft 32.

A specific implementation is: the inner diameter of the front end of the rear stop sleeve 34 is greater than the inner diameter of the rear end of the rear stop sleeve 34; the expansion sleeve 341 is disposed between the front end of the rear stop sleeve 34 and the rotating shaft 31, and the rear end of the rear stop sleeve 34 contacts the rotating shaft 31. The expansion sleeve 341 applies an outward expansion force to the front end of the rear stop sleeve 34, so as to enable the rear end of the rear stop sleeve 34 to clamp the rotating shaft 31 inwardly, thereby further improving the clamping force between the rear stop sleeve 34 and the rotating shaft 31.

The connection manner of the front stop sleeve 33 and the rotating shaft 31 can be pressing connection. Alternatively, this embodiment provides a specific implementation: a front stop sleeve fixing assembly is used and is disposed on the front end of the front stop sleeve 33, and is configured to fix the front stop sleeve 33 and limit axial movement of the front stop sleeve 33.

A specific implementation is: the front end of the front stop sleeve 33 is configured with a mounting groove with an opening facing forward, a central line of the mounting groove coincides with a central line of the rotating shaft 31, and a stop edge formed by extending inward is disposed on the opening of the mounting groove. The cross section of the mounting groove is circular, and the diameter of the mounting groove is greater than the diameter of the rotating shaft 31.

The front stop sleeve fixing assembly includes: a screw 331, a stop block 332 and a locking nut 333. The lengthwise direction of the screw 331 is consistent with the lengthwise direction of the rotating shaft 31, and the rear end of the screw 331 is fixedly connected to the front end of the rotating shaft 31. For example, a threaded hole is configured at the front end of the rotating shaft 31, and the screw 331 is screwed into the threaded hole for fixing.

The stop block 332 is sleeved on the screw 331, the rear end of the stop block 332 is located in the mounting groove, the size of the stop block 332 is greater than the size of the opening of the mounting groove, and the stop block 332 is limited in the mounting groove by the stop edge. The diameter of the rear end of the stop block 332 is greater than the diameter of the rotating shaft 31.

The locking nut 333 is located at the front end of the stop block 332 and is screwed in threaded fit with the screw 331. During screwing, the locking nut 333 moves towards the stop block 332, tightly presses the stop block 332 in an axial direction in the mounting groove, and limits forward movement of the front stop sleeve 33.

Further, a disc spring 334 is sleeved on the screw 331, and the disc spring 334 is located between the stop block 332 and the rotating shaft 31. When the stop block 32 moves backward, the disc spring 334 is compressed to accumulate elastic potential energy. After the front stop sleeve fixing assembly is assembled, a rebound force of the disc spring 334 urges the stop block 332 to apply an axial force to the locking nut 333, thereby achieving the purpose of preventing the nut from being loosened.

On the basis of the described solution, a support sleeve 36 can be further used to be sleeved on the rotating shaft 31, the support sleeve 36 is located between the front stop sleeve 33 and the rear stop sleeve 34, and the support sleeve 36 is in clearance fit with the wire roller 35. During assembling of the wire take-up and pay-off device, the wire roller 35 moves axially from front to back and is successively sleeved on the front stop sleeve 33 and the rear stop sleeve 34. In the process of not reaching the rear stop sleeve 34, the support sleeve 36 can primarily position and support the wire roller 35, so as to reduce the load pressure of an operator.

The support sleeve 36 can be in force fit with the rotating shaft 31 and rotate synchronously with the rotating shaft 31, to reduce vibration and anomalous noise during operation.

For mounting of the wire take-up and pay-off driver 31, this embodiment also provides a specific implementation:
the wire take-up and pay-off driver 321 can be mounted to a frame of the slicing machine by a motor fixing frame. Specifically, the motor fixing frame includes: a first mounting plate 311 and a second mounting plate 312. The first mounting plate 311 is parallel to a central line direction of the rotating shaft 32, and is located on a side surface of the wire take-up and pay-off driver 31; an upper part of the wire take-up and pay-off driver 31 is mounted on an adjacent surface of the first mounting plate 311 by a fixing base 313, and a bottom part of the wire take-up and pay-off driver 31 is also fixed to another surface of the first mounting plate 311 by a connecting member, thereby improving the stability of the wire take-up and pay-off driver 31 during operation. The fixing base 313 can be fixed to the first mounting plate 311 by welding, and can also be fixed to the first mounting plate 311 by bolts. The wire take-up and pay-off driver 31 can be fixed to the fixing base 313 by bolts.

The second mounting plate 312 is perpendicularly connected to the front end of the first mounting plate 311, the second mounting plate 312 is configured with a through hole, and the rotating shaft 31 can pass through the through hole and be connected with the wire take-up and pay-off driver 31.

Furthermore, a stop pin base 37 is used, and is disposed on the front end face of the second mounting plate 312. The stop pin base 37 is configured with a pin hole into which a stop pin is inserted. A detection means, such as a proximity sensor, a photoelectric sensor or the like, is disposed beside the stop pin base 37, and is used for detecting whether there is a stop pin inserted into the pin hole. An application scenario of this solution is: after the slicing machine stops working, a stop pin can be inserted into the pin hole. When the detection means detects that a stop pin is inserted, a signal is sent to a controller for processing to prohibit the rotation of the motor. Then, operations such as loading and unloading, and inspection and maintenance, etc. can be performed, thereby improving work safety and ensuring personal safety of an operator.

Further, a support member can be disposed under the wire roller 35, and is configured to temporarily support the wire roller 35 during assembling the wire roller 35. For example, at least two support rods 38 are disposed side by side on the front end face of the second mounting plate 312, and are located below the rotating shaft 31. The at least two support rods 38 extend along the central line direction of the rotating shaft 31, and a preset gap exists between any two support rods of the at least two support rods 38. In this embodiment, two support rods 38 are disposed side by side, and the distance between the two support rods 38 is greater than the radius of the wire roller 35 and less than the diameter of the wire roller 35, such that the two support rods 38 can temporarily support the wire roller 35.

During assembly, since the mounting position of the wire roller 35 is higher than ground, the wire roller 35 can be first lifted up and placed on the two support rods 38, and then after the front stop sleeve 33 and the rear stop sleeve 34 are mounted, the wire roller 35 is lifted up and mounted on the front stop sleeve 33 and the rear stop sleeve 34.

In a conventional solution, since the wire take-up and pay-off device has a large volume, the wire take-up and pay-off device is generally disposed on the rear end of the slicing machine, and a main roller is disposed on the front end of the slicing machine. A cutting wire is wound forward onto the main roller from a wire take-up and pay-off device at one side, and then wound backward onto the other wire take-up and pay-off device from the other side of the main roller.

As for the conventional solution, a first disadvantage is as described above, i.e. resulting in a large volume of the slicing machine; and a second disadvantage is: the routing distance of the cutting wire between the main roller and the wire take-up and pay-off device is too long, and if the tension of the cutting wire is small, the cutting wire is easily detached from a wire groove on the main roller; and if the tension of the cutting wire is large, there is a high risk of wire breaking, which makes control of the tension difficult.

On the basis of these problems, the described solution provided by the present embodiment reduces the volume of the wire take-up and pay-off device, and disposes said device below the main roller, thereby decreasing the distance between said device and the main roller, further shortening the routing distance, reducing the risk of wire breaking, and also reducing the difficulty of tension control.

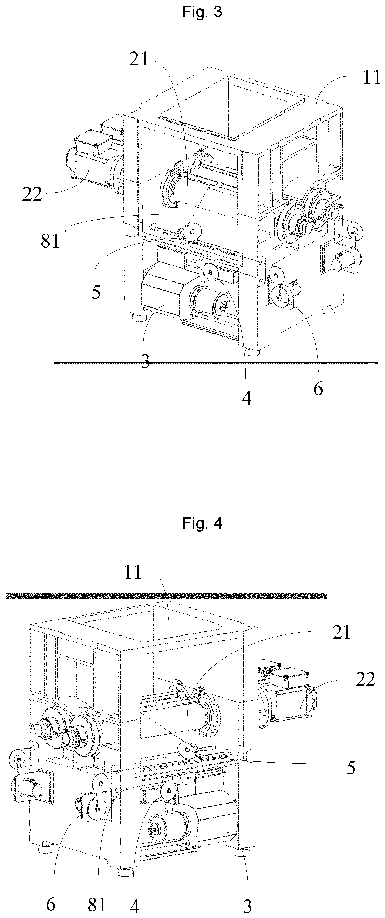

Fig. 3 illustrates one side view of a cutting station of a slicing machine provided according to embodiments of the present disclosure; and Fig. 4 illustrates another side view of a cutting station of a slicing machine provided according to embodiments of the present disclosure. As shown in Figs. 3 and 4, main rollers 21 are disposed on the upper portion of a cutting frame 11, and a main roller driver 22 is disposed on one end of each main roller 21 and is used for driving the main roller 21 to rotate. The two main rollers 21 are disposed parallel and side by side.

Wire take-up and pay-off devices 3 are disposed below the main rollers 21 and are respectively located at both sides of the frame 11. When the cutting wire moves along a certain direction, one of the wire take-up and pay-off devices 3 serves as a take-up device, and the other wire take-up and pay-off device serves as a pay-off device.

Further, the cutting frame 11 is further configured with wire laying devices 4, tension adjustment devices 6 and steering devices 5; the cutting wire 81 sequentially passes through a wire laying device 4, a tension adjustment device 6 and a steering device 5, then is wound around the main rollers 21, and then sequentially passes through a steering device 5, a tension adjustment device 6 and a wire laying device 4 on the other side. The wire laying devices 4 can move axially and are used for guiding the cutting wire 81 to be wound around wire rollers 35 disposed in the wire take-up and pay-off devices 3. The tension adjustment devices 6 are used to adjust the tension of the cutting wire 81. The steering devices 5 are used to change the direction of the cutting wire led out from the tension adjustment devices 6, such that the cutting wire is wound around the main rollers 21.

The present embodiment further provides a slicing machine, including: the wire take-up and pay-off device provided in any of the content above and a cutting device, wherein a cutting wire is wound on the wire take-up and pay-off device and the cutting device. The slicing machine can be a single-station slicing machine, and can also be a double-station slicing machine. The present embodiment specifically provides a double-station slicing machine, including two cutting stations, wherein the two cutting stations work independently of each other, and can perform cutting synchronously and can also perform cutting not synchronously, and each of the two cutting stations can cut one rod of hard and brittle material. The rod of hard and brittle material can be a silicon rod, a sapphire rod, or the like. In this embodiment, only a silicon rod is taken as an example to describe the slicing machine.

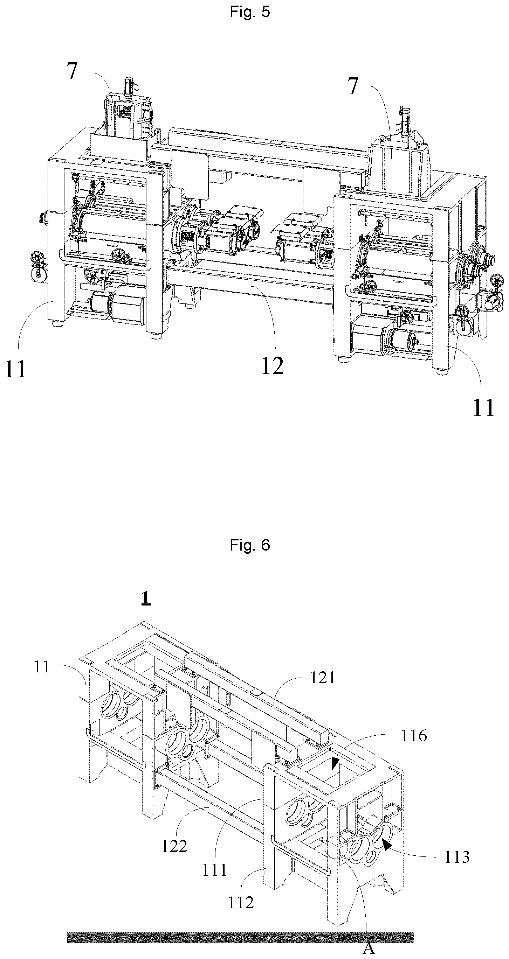

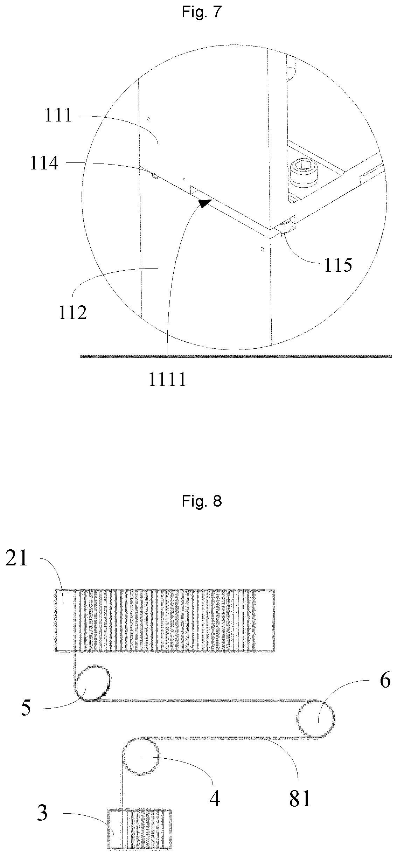

Fig. 5 illustrates a schematic structural diagram of a slicing machine provided according to embodiments of the present disclosure; Fig. 6 illustrates a schematic structural diagram of a frame in a slicing machine provided according to embodiments of the present disclosure; and Fig. 7 illustrates an enlarged view of region A in Fig. 6. As shown in Figs. 5-7, the double-station slicing machine provided in this embodiment includes: a frame 1, cutting devices 2, wire take-up and pay-off devices 3, and wiring systems. The frame 1 includes two cutting frames 11 and a connecting frame 12, the connecting frame 12 is connected between the two cutting frames 11.

The number of the cutting devices 2 is two, and the two cutting devices 2 are disposed on the cutting frame 11, respectively. Each of the cutting devices 2 includes a main roller 21 and a main roller driver 22, wherein the main roller driver 22 is connected with the main roller 21 and is used for driving the main roller 21 to rotate.

The number of the wire take-up and pay-off devices 3 is two, and the two wire take-up and pay-off devices 3 are respectively disposed on the cutting frame 11 and are located below the cutting devices 2. Each cutting frame 11 is configured with two wire take-up and pay-off devices 3, which are respectively located at two sides of the cutting frame 11. In the process of the cutting wire moving towards one direction, one wire take-up and pay-off device 3 serves as a pay-off device, and the other wire take-up and pay-off device serves as a take-up device.

One cutting frame 11 is configured with two sets of wiring systems, which are respectively located at two sides of the cutting frame 11. A single cutting wire is wound on the wire take-up and pay-off devices 3, the wiring systems and the main rollers 21, and multiple turns of the cutting wire are wound on the main rollers 21 to form a cutting wire net for cutting a silicon rod into silicon slices. The wiring systems are used for guiding the cutting wire and changing the winding direction of the cutting wire. Each of the wiring systems includes the described wire laying device 4, tension adjustment device 6 and steering device 5.

The cutting devices 2, the wire take-up and pay-off devices 3 and the wiring systems on each cutting frame 11 constitute one cutting station for cutting one silicon rod. The two cutting stations work independently, and can perform cutting synchronously and can also perform cutting not synchronously.

In the technical solution above, two cutting frames and the connecting frame connected between the two cutting frames are used to constitute the whole frame of the slicing machine, and each cutting frame is configured with cutting devices, wire take-up and pay-off devices and wiring systems to form a cutting station for cutting a rod of hard and brittle material; furthermore, the wire take-up and pay-off devices are placed below the cutting devices, such that the volume of the whole slicing machine can be reduced. The two stations are independent of each other, and can both cut a rod of hard and brittle material; and the number of cut rods is doubled while the occupation area of the slicing machine is not increased or has a slight increase, thereby greatly increasing the production efficiency.

On the basis of the technical solution above, the cutting frame 11 is described in detail:
a cutting space for accommodating the main rollers 21 is formed inside the cutting frame 11. The main rollers 21 are disposed side by side in a horizontal direction in the cutting space, and in this embodiment, two main rollers 21 are used and are disposed side by side. Two opposite side walls of the cutting frame 11 are respectively configured with frame openings 113, bearings are disposed in the frame openings 113, and the main rollers 21 pass through inner rings of the bearings. The main roller drivers 22 are disposed in the connecting frame 12, and are connected with end portions of the main rollers 21 passing through the frame openings 113 on the inner side. Two lower sides of the cutting frame 11 are respectively configured with wire take-up and pay-off spaces for accommodating the wire take-up and pay-off devices 3.

One implementation: each cutting frame 11 includes: an upper frame 111 and a lower frame 112, which are vertically disposed. The upper frame 111 and the lower frame 112 both have two opposite side walls, the two side walls of the upper frame 111 and the two side walls of the lower frame 112 are docked together, and a sealing strip 114 and a positioning structure 115 are configured between the bottom surface of the side wall of the upper frame 111 and the bottom surface of the side wall of the lower frame 112.

Specifically, the bottom surface of the upper frame 111 is docked with the top surface of the lower frame 112. Sealing grooves is configured on the top surface of the lower frame 112, and the sealing strip 114 is disposed in the sealing groove to fill a gap between the sealing groove and the upper frame 111.

In addition, a recessed platform 1111 is configured at a top corner of a bottom end of the upper frame 111, such that a certain gap exists between the surface of the recessed platform 1111 and the top surface of the lower frame 112. The top surface of the lower frame 112 is configured with an accommodating groove recessed downwards, and the accommodating groove is located below the recessed platform 1111 and is adjacent to an inner edge of the recessed platform 1111. The width of the accommodating groove is less than the width of the recessed platform 1111, such that the accommodating groove and the top surface of the lower frame 112 form a stepped surface. The accommodating groove is built into the positioning structure, e.g. a positioning block 115; and the height of the positioning block 115 is higher than the depth of the accommodating groove, such that the positioning block 115 limits the upper frame 111 from moving to the outer side, so as to position the upper frame and the lower frame.

The top of the upper frame 111 is configured with a feeding through hole 116, a feeding device 7 is disposed on the top of the upper frame 111, the feeding device 7 passes through the through hole 116, and a bottom end of the feeding device 7 is used for grabbing a rod to be cut, such as a silicon rod.

The connecting frame 12 includes: at least two upper connecting cross beams 121 and at least two lower connecting cross beams 122. The at least two upper connecting cross beams 121 are connected between two upper frames 111, and the at least two lower connecting cross beams 122 are connected between two lower frames 112. A space for redundantly accommodating the main roller drivers 22 is formed between the at least two upper connecting cross beams 121 and the at least two lower connecting cross beams 122. In this embodiment, two upper connecting cross beams 121 having ends connected to the top surfaces of the upper frames 111, and two lower connecting cross beams 122 having ends connected to the inner side surfaces of the lower frames 112, are used. The upper connecting cross beams 121 and the lower connecting cross beams 122 can all be connected to the cutting frames 11 by bolting or welding.

Each of the cutting frames 11 is configured with a set of cutting equipment, wire take-up and pay-off devices and wiring systems, and is used as a station for slicing the silicon rod. The two cutting stations can use the same structure and layout, and in this embodiment, only one cutting station is described as an example.

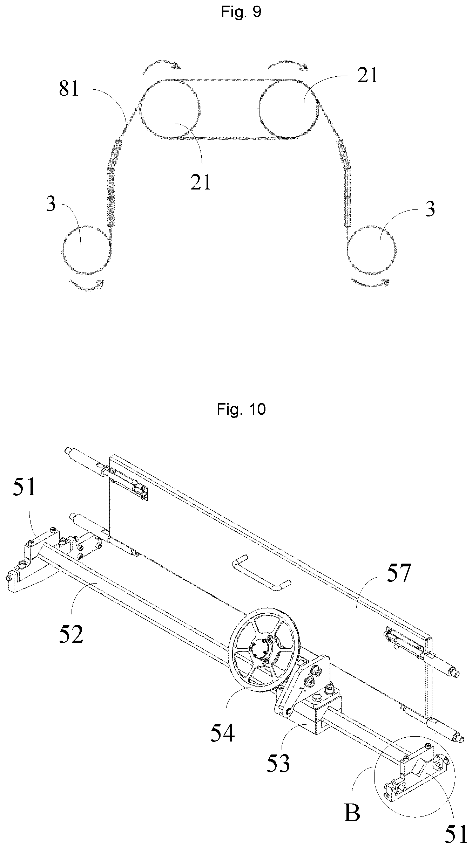

Fig. 8 illustrates a side view of routing of a cutting wire of a slicing machine provided according to embodiments of the present disclosure; and Fig. 9 illustrates a side view in another angle of routing of a cutting wire of a slicing machine provided according to embodiments of the present disclosure. As shown in Figs. 3-9, one cutting station is configured with two main rollers 21 extending in the horizontal direction. The two main rollers 21 are disposed side by side, and are mounted on the upper frame 111 via the bearings. Each of the main roller drivers 22 is connected to one end of the main roller 21, and is used for driving the rotation of the main roller 21. Wire take-up and pay-off devices 3 are respectively disposed on two lower sides of the main rollers 21, and the cutting wire is wound between the main rollers 21 and the two wire take-up and pay-off devices 3, and performs a unidirectional motion or a reciprocating motion.

In each wiring system, the wire laying device 4 is disposed above the wire take-up and pay-off device 3 and can move along the axial direction of the wire take-up and pay-off device 3 and is used for guiding the cutting wire 81 to be wound around the wire roller 35 disposed in the wire take-up and pay-off device 3 according to a wiring texture rule; or the wire laying device is used for guiding the cutting wire to be paid off from the wire take-up and pay-off device 3 according to the wiring texture rule, thereby preventing the cutting wire from generating situations such as winding and rubbing.

The tension adjustment device 6 is disposed between the wire laying device 4 and the main roller 21, and is used for adjusting the tension of the cutting wire 81. The steering device 5 is disposed on a side face of the main roller 21, and after being paid off from the tension adjustment device 6, the cutting wire changes its direction through the steering device 5 and is wound around the main roller 21.

The tension adjustment device 6 is located on the outer side of the cutting frame, and both the wire laying device 4 and the wire take-up and pay-off device 3 are located on a side face of the lower frame 112. The upper frame 111 is spaced apart from the lower frame 112 to prevent a cutting fluid that flies out of a cutting region during cutting from adhering to the wire laying device 4, the steering device 5 and the tension adjustment device 6 to protect same.

For the steering device 5 above, this embodiment provides an implementation:

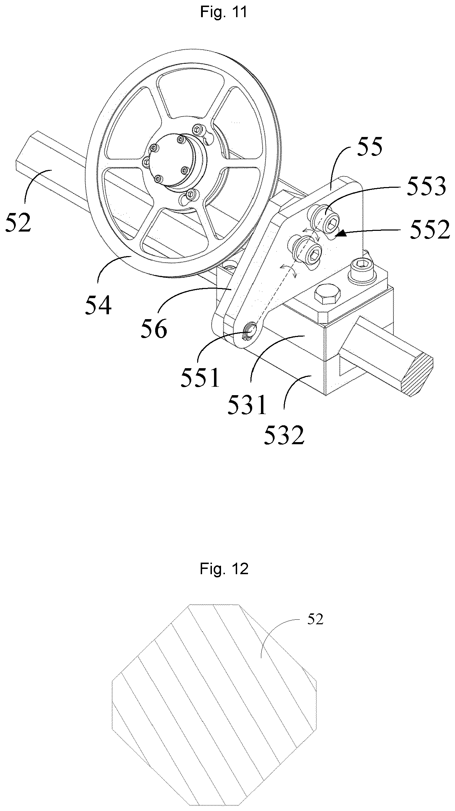

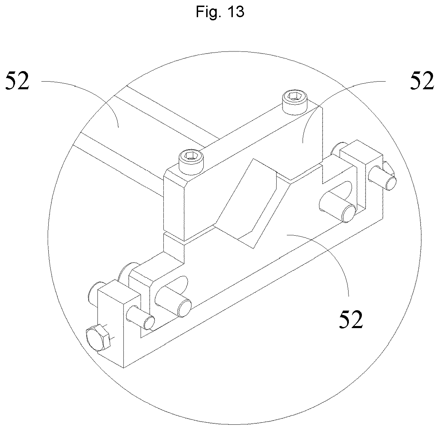

Fig. 10 illustrates a schematic structural diagram of a cutting wire steering device provided according to embodiments of the present disclosure; Fig. 11 illustrates a partially enlarged view of a cutting wire steering device provided according to embodiments of the present disclosure; Fig. 12 illustrates a cross-sectional view of a guide rod in a cutting wire steering device provided according to embodiments of the present disclosure; and Fig. 13 illustrates an enlarged view of region B in Fig. 10. As shown in Figs. 10-13, the present embodiment provides a cutting wire steering device, including: steering bases 51, a guide rod 52, a steering wheel base 53 and a steering wheel 54.

The number of the steering bases 51 is two, and the two steering bases 51 are spaced apart from each other along the axial direction of the main roller 21. The guide rod 52 is connected between the two steering bases 51, and the guide rod 52 extends in the axial direction of the main roller 21.

The steering wheel base 53 is disposed on the guide rod 52, and can slide along the guide rod 52. The steering wheel 54 is disposed on the steering wheel base 53, and moves together with the steering wheel base 53. A wire groove for accommodating the cutting wire 81 is disposed on the outer periphery of the steering wheel 54, and a rotation central line of the steering wheel 54 is perpendicular to the axial direction of the main roller 21. During application, the left end of the steering wheel 54 is aligned with the wire groove at the end of the main roller 21, the cutting wire 81 is wound in the wire groove from right to left at the bottom of the steering wheel 54, and is paid off upwards from the left side of the steering wheel 5 and wound around the main roller 21.

By adjusting the position of the steering wheel base 53 on the guide rod 52, the position of the steering wheel 54 relative to the main roller 21 can be adjusted, such that there is no included angle between the tangential direction of the wire groove and the cutting wire 81, thereby avoiding the problem of shortening the service life of the cutting wire caused by damage to the cutting wire due to friction between the cutting wire 81 and the side wall of the wire groove, and improving the reliability of the cutting process.

The cutting wire steering device uses two steering bases disposed at an interval, a guide rod connected between the two steering bases, a steering wheel base capable of sliding along the guide rod, and a steering wheel disposed on the steering wheel base, wherein a wire groove for accommodating the cutting wire is configured on the outer periphery of the steering wheel, and a rotation central line of the steering wheel is perpendicular to the axial direction of the main roller. By adjusting the position of the steering wheel, the cutting wire can be wound around the steering wheel, and can be paid off from one side of the steering wheel and directly wound in the wire groove of the main roller, thereby reducing the friction generated between the cutting wire and the side wall of the wire groove of the main roller, further reducing the abrasion of the cutting wire, further ensuring the cutting quality of the rod of hard and brittle material, also reducing the risk of wire breaking and ensuring the production efficiency.

On the basis of the technical solutions above, the present embodiment further optimizes the steering device:
the guide rod 52 has an elongated structure, and the cross-sectional shape thereof can be circular, rectangular, regular polygonal, or an irregular shape. In this embodiment, the cross section of the guide rod 52 is of a chamfered rectangle, and correspondingly, a through hole for the guide rod 52 to pass through is configured on the steering wheel base 53, such that the guide rod 52 passes through the through hole.

The steering wheel base 53 can be an integrated structure, and can also be a split structure. A specific implementation: the steering wheel base 53 includes: an upper slide base 531 and a lower slide base 532. The bottom of the upper slide base 531 is configured with an upper groove, and the top of the lower slide base 532 is configured with a lower groove. The lower slide base 532 is docked with the upper slide base 531, and the upper groove and the lower groove form the through hole for the guide rod 52 to pass through. The steering wheel 54 is disposed on the upper slide base 531.

One implementation is: the shape of the upper groove matches the shape of the upper peripheral surface of the guide rod 52, and the cross section of the lower groove is rectangular. Such an arrangement can avoid relative rotation between the upper slide base 531, the lower slide base 532 and the guide rod 52, such that the position of the steering wheel 54 remains fixed during cutting, and then the cutting wire 81 is stably paid off from the steering wheel 54 without changing the pay-off direction.

Further, a steering mechanism is connected between the upper slide base 531 and the steering wheel 54, and is used for adjusting the rotation angle of the steering wheel 54 in a plane perpendicular to the axial direction of the main roller 21, which is equivalent to adjusting the pitch angle of the steering wheel 54 to adapt same to main rollers 21 of different heights or different diameters.

A specific implementation is: the steering mechanism includes: a steering vertical plate 55 and a steering wheel connecting member 56. The steering vertical plate 55 is vertically disposed on the upper surface of the upper slide base 531. The steering wheel connecting member 56 extends along the axial direction of the main roller, and one end thereof is rotatably connected with the steering vertical plate 55, and the other end is connected with a rotation shaft of the steering wheel 54. One end of the rotation shaft is fixedly connected with the steering wheel connecting member 56, and the other end is rotatably connected with the steering wheel 54. The steering wheel 54 moves together with the steering wheel connecting member 56.

The steering wheel connecting member 56 is rotatably connected with the steering vertical plate 55, and the pitch angle of the steering wheel 54 is adjusted by adjusting the rotation angle of the steering wheel connecting member 56 relative to the steering vertical plate 55.

Further, an end portion of the steering vertical plate 55 is configured with a hinge hole, the steering vertical plate 55 is rotatably connected with the steering wheel connecting member 56 by a hinge shaft 551 inserted into the hinge hole, such that the steering wheel connecting member 56 can rotate around the shaft, thereby driving the steering wheel 54 to rotate.

The steering vertical plate 55 is further configured with long holes 552, and is connected with the steering wheel connecting member 56 by threaded connecting members 553 inserted into the long holes 552. The positions of the threaded connecting members 553 are adjustable within the long holes 552. Specifically, each of the long holes 552 can be a linear long hole, and can also be an arcuate long hole or a zigzag long hole, and the lengthwise direction of the long hole extends in an arc drawn by taking the center of the hinge shaft 511 as the center of circle and taking a connecting line between the center of the threaded connecting member 553 and the center of the hinge shaft as a radius.

When the threaded connecting member 553 is unscrewed, the position of the threaded connecting member 553 in the long hole 552 is adjusted, and thus the pitch angle of the steering wheel 54 is adjusted. After adjusted in place, the threaded connecting member 553 is screwed, to lock the steering wheel connecting member 56 in this position.

In this embodiment, the steering vertical plate 55 is configured with two long holes 552, and is connected with the steering wheel connecting member 56 by two threaded connecting members 553 inserted into the long holes 522.

Further, this embodiment further provides an implementation of a steering base 51. The steering base 51 includes: an upper base 511 and a lower base 512. The top of the lower base 512 is configured with a lower groove with a shape matching the lower peripheral surface of the guide rod 52, and the bottom of the upper base 511 is configured with an upper groove with a shape matching the upper peripheral surface of the guide rod 52. The upper base 511 and the lower base 512 are connected, and clamp the guide rod 52 from the upper side and the lower side respectively, which supports the guide rod 52 on one hand, and can limit the rotation of the guide rod 52 on the other hand.

On the basis of the described technical solution, a steering wheel shield 57 is used, is vertically disposed on a side face of the steering wheel 54, is located between the steering wheel 54 and the main roller 21, and is used for protecting the steering wheel 54. In the process of the cutting wire cutting the rod of hard and brittle material, a cutting fluid will be sprayed for cooling, and the steering wheel shield 57 can prevent the cutting fluid from splashing to the steering wheel 54, so as to protect the steering wheel 54 and other components.

The steering wheel shield 57 can have a substantially rectangular structure, the length direction thereof is consistent with the axial direction of the main roller 21, and the vertical height of the steering wheel shield 57 is lower than the cutting wire 81 between the steering wheel 54 and the main roller 21. In other words, when the steering wheel shield 57 is placed vertically, the cutting wire 81 between the steering wheel 54 and the main roller 21 passes over the steering wheel shield 57 and does not contact the steering wheel shield 57, thereby preventing friction between the cutting wire and the steering wheel shield 57.

Further, in order to facilitate maintenance and winding of the main roller 21, the steering wheel shield 57 can also be configured to be overturned up and down. In the cutting process, the steering wheel shield 57 is erected; and when maintenance of the main roller 21 is required, the steering wheel shield 57 is placed horizontally to leave a maintenance space.

In one implementation, a bottom end of the steering wheel shield 57 is rotatably connected to the cutting frame 11, for example, rotatably connected by components such as hinges. An upper portion of the steering wheel shield 57 is locked to the cutting frame 11 by latches. The latch can adopt a structure commonly used in the mechanical field, and achieves locking and unlocking by insertion and removal rotation actions.

Before cutting, the cutting wire is wound around the main rollers 21 to form a wire mesh, the positions of the upper slide base 531 and the lower slide base 532 are adjusted according to the width of the wire mesh and fixed, and then the pitch angle of the steering wheel 54 is adjusted by adjusting the positions of the threaded connecting members 553 in the long holes, so as to ensure the optimal winding of the cutting wire and reduce winding of the cutting wire during operation. After the adjustment, the threaded connecting members 553 are screwed for fixing.

With regard to the mounting structure of each main roller 21, the present embodiment provides a specific implementation:

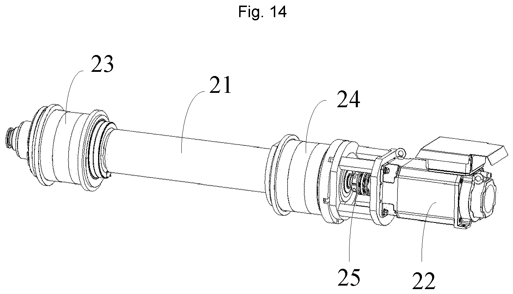

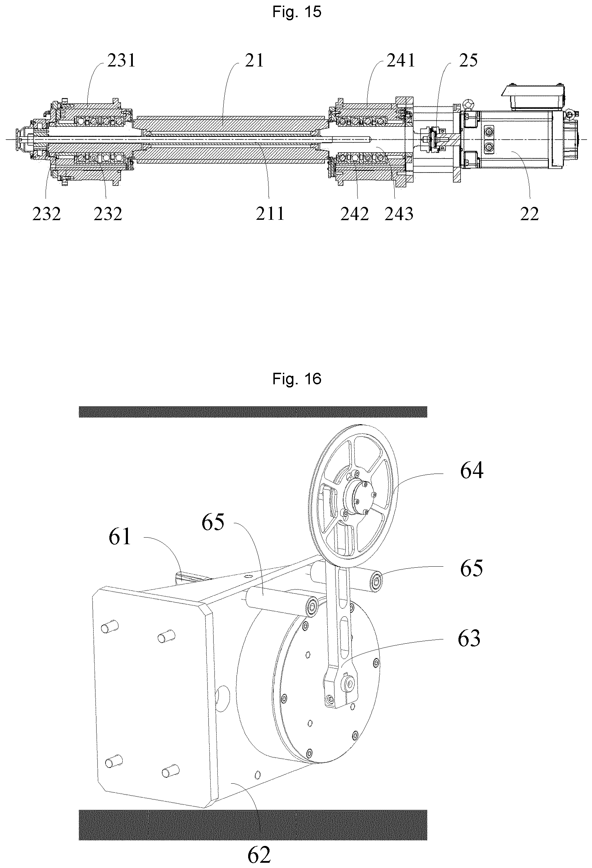

Fig. 14 illustrates a schematic structural diagram of a mounting structure of a main roller provided according to embodiments of the present disclosure; and Fig. 15 illustrates a cross-sectional view of a mounting structure of a main roller provided according to embodiments of the present disclosure. As shown in Fig. 14 and Fig. 15, a rear axle casing 24 is disposed inside the frame opening 113 on the inner side of the upper frame 111.

The rear axle casing 24 includes: a rear axle box 241, a rear bearing 242 and a rear connecting shaft 243. The rear connecting shaft 243 is disposed in the rear axle box 241, and the rear bearing 242 is disposed between the rear connecting shaft 243 and the rear axle box 241, such that the rear connecting shaft 243 can rotate relative to the rear axle box 241. The rear connecting shaft 243 is connected with an output shaft of the main roller driver 22 via a coupling 25, and the main roller driver 22 is specifically a driving motor.

A front axle casing 23 includes: a front axle box 231, a front bearing 231 and a front connecting shaft 233. The front connecting shaft 233 is disposed inside the front axle box 231, and the front bearing 232 is disposed between the front connecting shaft 233 and the front axle box 231, such that the front connecting shaft 233 can rotate relative to the front axle box 231.

The main roller 21 is of a hollow structure, and an elastic pull rod 211 passes through the interior of the main roller. One end of the elastic pull rod 211 passing out of the main roller 21 is connected with the front connecting shaft 233, and the other end passing out of the main roller 21 is connected with the rear connecting shaft 243. Specifically, ends of the elastic pull rod 211 are configured with threads, and are screwed into threaded holes at ends of corresponding connecting shafts, such that the front and rear axle casings are firmly connected with the main roller by a contraction force generated after the pull rod is elastically deformed. Pins are reserved on the axle boxes for connecting with the main roller 21.

An end of the rear connecting shaft 243 is configured with a tapered surface, an end of the front connecting shaft 233 is configured with a tapered surface, and the inner walls of the ends of the main roller 21 are fitted with the tapered surfaces of the two connecting shafts respectively at high precision.

With regard to the tension adjustment device 6, the present embodiment provides a specific implementation:
Fig. 16 illustrates a schematic structural diagram of a tension adjustment device provided according to embodiments of the present disclosure. As shown in Fig. 16, the tension adjustment device 6 includes: a tension motor 61, a tension base 62, a tension arm 63 and a tension wheel 64. The tension base 62 can be mounted to the cutting frame 11, in particular to the outer side face of the lower frame 112. The tension motor 61 is mounted at one side of the tension base 62. The tension arm 63 is disposed on the other side of the tension base 62, and is fixedly connected with an output shaft of the tension motor 61. The other end of the tension arm is connected with the tension wheel 64, a peripheral surface of the tension wheel 64 is configured with a wire groove, and the cutting wire is wound around the wire groove of the tension wheel 64. The tension motor 61 drives the tension arm 63 to rotate, thereby driving the tension wheel 64 to move, for increasing the tension of the cutting wire or decreasing the tension of the cutting wire.

Further, two limiting rods 65 are fixed on the tension base 62 and located at two sides of the tension arm 63, and are used for limiting the rotation angle of the tension arm 63, so as to prevent the tension of the cutting wire from being too large or too small.

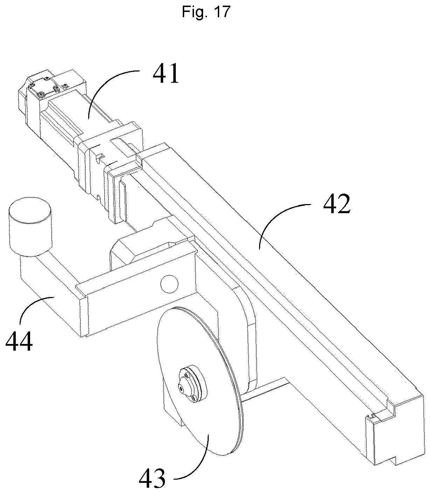

Fig. 17 illustrates a schematic structural diagram of a wire laying device provided according to embodiments of the present disclosure. As shown in Fig. 17, the present embodiment provides a wire laying device 4, including: a wire laying motor 41, a wire laying module 42, a wire laying wheel 43 and a counterweight mechanism 44. The wire laying module 42 is mounted to the cutting frame 11, specifically fixed to both sides of the lower frame 112, and located above the wire take-up and pay-off device 3. The wire laying wheel 43 is configured on the wire laying module 42, and the wire laying motor 41 is configured to drive the movement of the wire laying wheel 43 to reciprocate with respect to the wire laying module 42. The counterweight mechanism 44 and the tension wheel can be adjusted to achieve a horizontal balance state at a certain rotation point, such that the steering wheel 43 does not shake during the reciprocation.

The feeding device 7 can use the following manner:

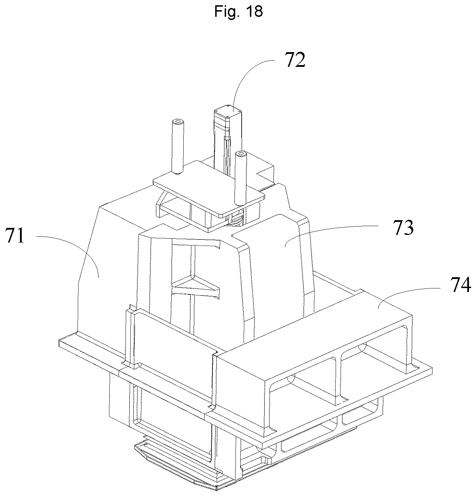

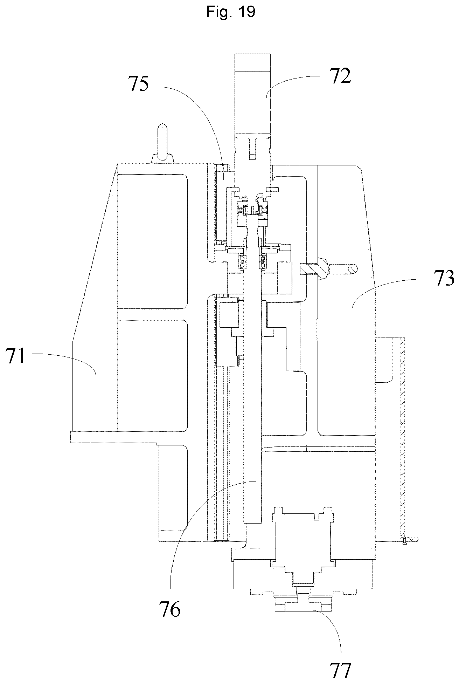

Fig. 18 illustrates a schematic structural diagram of a feeding device provided according to embodiments of the present disclosure; and Fig. 19 illustrates a side view of a feeding device provided according to embodiments of the present disclosure. As shown in Figs. 18 and 19, the feeding device 7 includes: a feeding base 71, a feeding driving assembly 72, a sliding plate box 73, a support base 74, a slider rail mechanism 75, a lead screw 76 and a silicon material clamping base 77.

The feeding base 71 and the support base 74 are located in the feeding through hole 116, and are mounted onto the cutting frame 11, specifically onto the upper frame 111. The sliding plate box 73 and the feeding base 71 are connected with the feeding base 71 by the lead screw 76 and the slider rail mechanism 75, the feeding driving assembly 72 is used for driving the sliding plate box 73 to move up and down relative to the feeding base 71, and guiding is achieved by the slider rail mechanism 75 during movement. The silicon material clamping base 77 is disposed on the bottom end of the sliding plate box 73 and is used for clamping a silicon rod.

In the illustration of some embodiments of the present disclosure, it should be understood that orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer", etc. are orientation or positional relationships based on the accompanying drawings, are only used to facilitate the illustration of some embodiments of the present disclosure and to simplify the illustration, rather than indicating or implying that a device or element referred to must have a specific orientation, and be constructed and operated in the specific orientation, and therefore said terms cannot be understood as limitation to some embodiments of the present disclosure.

In addition, terms "first" and "second" are only used for descriptive purposes, and cannot be understood as indicating or implying relative importance or implicitly indicating the number of indicated technical features. Thus, features defined by "first" and "second" can explicitly or implicitly include one or more of the features. In the illustration of the present disclosure, the meaning of "a plurality of" is at least two, for example, two, three, etc., unless explicitly and specifically defined otherwise.

In the present disclosure, unless specified or limited otherwise, the terms such as "mount", "connect to", "connect with", "connect" and "fix", etc. should be understood broadly, and for example, can be fixed connection, and can also be detachable connection, or integral connection; can be mechanical connection, and can also be electrical connection, or can communicate with each other; can be direct connection, and can also be indirect connection by means of an intermediate medium, and can also be interior communication between two elements, or interaction relationship between two elements. For a person of ordinary skill in the art, specific meanings of the described terms in the present disclosure could be understood according to specific situations.

Although preferred embodiments of the present disclosure have been described, a person skilled in the art could make additional changes and modifications to these embodiments once they know the basic inventive concept. Therefore, it is intended that the appended claims shall be construed to comprise the preferred embodiments and all the changes and modifications falling within the scope of the present disclosure.

Obviously, a person skilled in the art could make various modifications and variations to the present disclosure without departing from the spirit and scope of the present disclosure. As such, if these modifications and variations of the present disclosure fall within the scope of the claims and their equivalent techniques of the present disclosure, the present disclosure is also intended to include these modifications and variations.

## Claims

1. A wire take-up and pay-off device, comprising:
a wire take-up and pay-off driver;
a rotating shaft, a rear end of the rotating shaft is connected with the wire take-up and pay-off driver;
a front stop sleeve, fixedly sleeved on a front end of the rotating shaft and rotating synchronously with the rotating shaft;
a rear stop sleeve, fixedly sleeved on the rear end of the rotating shaft and rotating synchronously with the rotating shaft; and
a wire roller, fixedly sleeved outside of the front stop sleeve and the rear stop sleeve, and rotating synchronously with the front stop sleeve and the rear stop sleeve.

2. The wire take-up and pay-off device as claimed in claim 1, wherein a front stop portion is disposed on a periphery of the front stop sleeve; an outer diameter of the front stop portion gradually decreases in a front-to-rear direction, and a rear end of the front stop portion extends to a rear end of the front stop sleeve; and
a rear stop portion is disposed on a periphery of the rear stop sleeve; and an outer diameter of the rear stop portion gradually increases in a front-to-rear direction, and a front end of the rear stop portion extends to a front end of the rear stop sleeve;
an inner wall of a front end of the wire roller is configured with a surface that matches and contacts the front stop portion, and an inner wall of a rear end of the wire roller is configured with a surface that matches and contacts the rear stop portion; and the front end of the wire roller is sleeved outside the front stop portion, and the rear end of the wire roller is sleeved outside the rear stop portion.

3. The wire take-up and pay-off device as claimed in claim 2, wherein the wire take-up and pay-off device further comprises: an expansion sleeve, tightly sleeved between the rear stop sleeve and the rotating shaft.

4. The wire take-up and pay-off device as claimed in claim 3, wherein an inner diameter of the front end of the rear stop sleeve is greater than an inner diameter of an rear end of the rear stop sleeve; the expansion sleeve is disposed between the front end of the rear stop sleeve and the rotating shaft; and the rear end of the rear stop sleeve is in contact with the rotating shaft.

5. The wire take-up and pay-off device as claimed in claim 2, wherein the wire take-up and pay-off device further comprises: a front stop sleeve fixing assembly, disposed on an front end of the front stop sleeve and used for fixing the front stop sleeve.

6. The wire take-up and pay-off device as claimed in claim 5, wherein the front end of the front stop sleeve is configured with a mounting groove with an opening facing forward, a central line of the mounting groove coincides with a central line of the rotating shaft; a stop edge formed by extending inward is disposed on the opening of the mounting groove; and
the front stop sleeve fixing assembly comprises:
a screw, a rear end of the screw is fixedly connected to the front end of the rotating shaft;
a stop block, sleeved on the screw, and a rear end of the stop block is limited in the mounting groove by the stop edge; and
a locking nut, disposed on a front end of the stop block and being in threaded fit with the screw.

7. The wire take-up and pay-off device as claimed in claim 6, wherein the front stop sleeve fixing assembly further comprises:
a disc spring, sleeved on the screw and disposed between the stop block and the rotating shaft.

8. The wire take-up and pay-off device as claimed in any one of claims 1-7, wherein the wire take-up and pay-off device further comprises:
a support sleeve, sleeved on the rotating shaft and disposed between the front stop sleeve and the rear stop sleeve; wherein the support sleeve is in clearance fit with the wire roller.

9. The wire take-up and pay-off device as claimed in any one of claims 1-7, wherein the wire take-up and pay-off device further comprises:
a motor fixing frame;
wherein the motor fixing frame comprises:
a first mounting plate; wherein the first mounting plate is parallel to a central line direction of the rotating shaft and is disposed on a side surface of the wire take-up and pay-off driver, and the wire take-up and pay-off driver is mounted on the first mounting plate by a fixing base; and
a second mounting plate, perpendicularly connected to a front end of the first mounting plate; wherein the second mounting plate is configured with a through hole for the rotating shaft to pass through.

10. The wire take-up and pay-off device as claimed in claim 9, wherein the wire take-up and pay-off device further comprises:
a stop pin base, disposed on a front end face of the second mounting plate; wherein the stop pin base is configured with a pin hole into which a stop pin is inserted.

11. The wire take-up and pay-off device as claimed in claim 9, wherein the wire take-up and pay-off device further comprises:
at least two support rods, disposed side by side on the front end face of the second mounting plate, and disposed below the rotating shaft; wherein the at least two support rods extend along the central line direction of the rotating shaft, and a preset gap exists between any two support rods of the at least two support rods.

12. A slicing machine, comprising: the wire take-up and pay-off device as claimed in any one of claims 1-11 and a cutting device, wherein a cutting wire is wound on the wire take-up and pay-off device and the cutting device.
